## Europäisches Patentamt
## European Patent Office
## Office européen des brevets

(19)

(11) Veröffentlichungsnummer : **0 234 286**
**B1**

(12)                    EUROPÄISCHE PATENTSCHRIFT

(45) Veröffentlichungstag der Patentschrift :
26.04.89

(51) Int. Cl.⁴ : **B 60 S   1/32**, B 60 S   1/40

(21) Anmeldenummer : 87100882.7

(22) Anmeldetag : 22.01.87

(54) Wischarm für Scheibenwischer.

(30) Priorität : 24.01.86 FR 8601000

(43) Veröffentlichungstag der Anmeldung :
02.09.87 Patentblatt 87/36

(45) Bekanntmachung des Hinweises auf die Patenterteilung : 26.04.89 Patentblatt 89/17

(84) Benannte Vertragsstaaten :
DE ES FR GB IT SE

(56) Entgegenhaltungen :
DE—A— 3 340 449
DE—A— 3 343 318
FR—A— 2 556 297

(73) Patentinhaber : PAUL JOURNEE S.A.
39, Avenue Marceau
F-92400 Courbevoie (FR)

(72) Erfinder : Journée, Maurice
Le Bois Hédouin
F-60240 Reilly (FR)

(74) Vertreter : Patentanwaltsbüro Cohausz & Florack
Postfach 14 01 47
D-4000 Düsseldorf 1 (DE)

**Beschreibung**

Die Erfindung bezieht sich auf einen Arm für einen Scheibenwischer, bestehend aus einem Gehäuse, von dem ein Ende schwenkbar an einer Pendelnabe befestigt ist und das andere Ende einen Scheibenwischer trägt, wobei der Arm durch mindestens eine Feder gegen die zu wischende Fläche gedrückt wird, wobei das Gehäuse aus einem einzigen Stück besteht und so profiliert ist, daß es eine geneigte Anströmfläche bildet, die in Richtung der zu wischenden Fläche konvergiert und sich über den größeren Teil des Gehäuses erstreckt, wobei das Gehäuse Mittel zum Einhaken eines Scheibenwischers umfaßt (Siehe z. B. DE-A-3 343 318).

Die Entwicklung hochgeschwindiger Fahrzeuge wird behindert durch deren Verwendung in Regenzeiten, weil der Scheibenwischer bei hoher Fahrzeuggeschwindigkeit dazu neigt, im Verlauf seiner Pendelbewegung von der zu wischenden Fläche abzuheben. Dieses Abheben wird durch Strömungskräfte bewirkt, die an der großen Vorderfläche des Arms, an der Befestigung des Wischers am Arm und am Wischer selbst entstehen.

Um die senkrecht zu der zu wischenden Fläche wirkende Komponente dieser Strömungskräfte zu verkleinern, die zum Abheben des Wischarms neigt, wird in der DE-A-3 343 318 vorgeschlagen, diese Arme mit einer geneigten Anströmfläche auszurüsten, die tendenziell, die Komponente im umgekehrten Sinn vergrößert, d. h. tendenziell den Arm gegen die Fläche drückt. Bei diesem bekannten Wischarm liegt die Verbindung zwischen Arm und Wischblatt neben der Anströmfläche im Luftstrom, so daß die Verbindung einen erheblichen Luftwiderstand erzeugt, der zu einem Flattern als auch zu einem Abheben des Wischblattes von der Scheibe führt.

Aufgabe der Erfindung ist es, einen Wischarm der eingangs beschriebenen Art zu schaffen, der ein ausgezeichnetes Verhalten bei hoher Fahrgeschwindigkeit dank einer geringen Höhe gegenüber der anströmenden Luft über die gesamte Länge des Arms und vor der Verbindung zwischen Arm und Wischer gewährleistet und sich dennoch einfach und wirtschaftlich herstellen läßt.

Diese Aufgabe wird erfindungsgemäß dadurch gelöst, daß die Mittel zum Einhaken in der Querverlängerung der Anströmfläche so angeordnet sind, daß bei der Hinbewegung des Wischers die Verbindung zwischen Arm und Wischer hinter der Anströmfläche liegt, und daß sowohl die Verbindung als auch ein Teil des Wischers durch das Profil des Gehäuses verdeckt sind.

Bei diesem Wischarm befindet ich die Verbindung zwischen Arm und Wischblatt bei der Hinbewegung des Wischers hinter der Anströmfläche, so daß der Luftstrom über die Verbindung hinweggeleitet wird. Das Wischblatt liegt damit auch bei hohen Geschwindigkeiten ruhig und fest an der Scheibe an. Vorzugsweise umfaßt das Gehäuse Öffnungen oder Löcher, die bei der Hinbewegung des Wischers hinter der Anströmfläche eingearbeitet sind. In einer Ausführungsform umfassen die Mittel zum Befestigen eines Scheibenwischers einen Haken, der mit dem Gehäuse ein einziges Stück bildet. Bei einer Variante umfaßt das freie Ende des Gehäuses einen der Anströmfläche entgegengesetzten querverlaufenden Vorsprung, der mit Mitteln zum Befestigen eines Zwischenstückes für die Montage eines Scheibenwischers ausgerüstet ist.

Die Erfindung wird besser verständlich beim Lesen der folgenden Beschreibung unter Bezugnahme auf die beigeheftete Zeichnung, in der :

— Figur 1 eine perspektivische Schemaansicht nach einem Ausführungsbeispiel der Erfindung ist ;

— Figur 2 ist eine vergrößerte Ansicht eines Teils des freien Endes des Arms in Figur 1, ausgerüstet mit einem Haken zum Befestigen eines Scheibenwischers ;

— Figur 3 ist eine vergrößerte Ansicht des freien Endes des Arms für eine erste Variante ;

— Figur 4 entspricht der Figur 3 für eine zweite Variante mit einem Befestigungszwischenstück im Verlauf der Montage ;

— Figur 5 ist eine schematische Querschnittsansicht des Zusammenbaus der Figur 4 nach der Montage ; und

— Figur 6 ist eine perspektivische Schemaansicht des Endes eines erfindungsgemäßen Arms für eine dritte Variante mit einem Befestigungsstück mit Druckknopf.

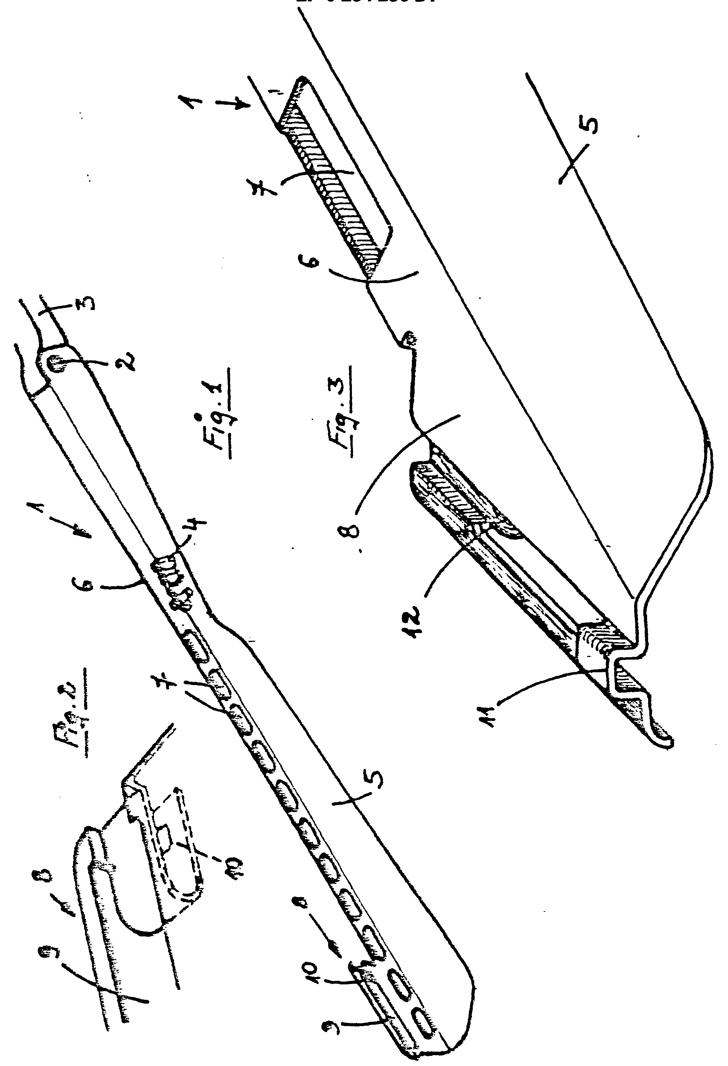

Unter Bezugnahme auf Figur 1 wird der erfindungsgemäße Arm durch ein einteiliges Gehäuse 1 gebildet, das aus einer ausgeschnittenen und tiefgezogenen Blechplatine geformt und schwenkbar an einem Ende um eine Achse 2 an einer Pendelnabe 3 befestigt wird. Eine Feder 4 drückt den Arm gegen die zu wischende Fläche, d. h. in der Zeichnung nach unten. Das Gehäuse 1 umfaßt eine Anströmfläche 5, die geneigt ist und zur zu wischenden Fläche hin konvergiert, wobei sie sich über den größeren Teil des Gehäuses 1 erstreckt. Die Anströmfläche ist die Fläche, die sich im Verlauf der Wischbewegung vorn befindet und infolgedessen während der Rücklaufperiode hinten liegt. In einem Bereich 6, im wesentlichen parallel zur zu wischenden Fläche und die Kante 5 verlängernd, umfaßt das Gehäuse 1 Öffnungen 7, die ein Entweichen der Luft senkrecht zur zu wischenden Fläche ermöglichen.

An seinem der Achse 2 entgegengesetzten Ende umfaßt das Gehäuse 1 einen Quervorsprung 8, der zur Aufnahme eines Scheibenwischers (nicht dargestellt) unmittelbar oder über ein Zwischenstück bestimmt ist.

In der Ausführungsform der Figuren 1 und 2 umfaßt der Vorsprung 8 eine Längskehle 9, die zur zu wischenden Fläche hin gerichtet ist und durch einen Haken 10 abgeschlossen wird, der zusammen mit dem Gehäuse ausgeschnitten wurde. In der Variante der Figur 3 ist die Kehle 11 in entgegengesetztem Sinn gerichtet, und der Haken 12 ist umgekehrt.

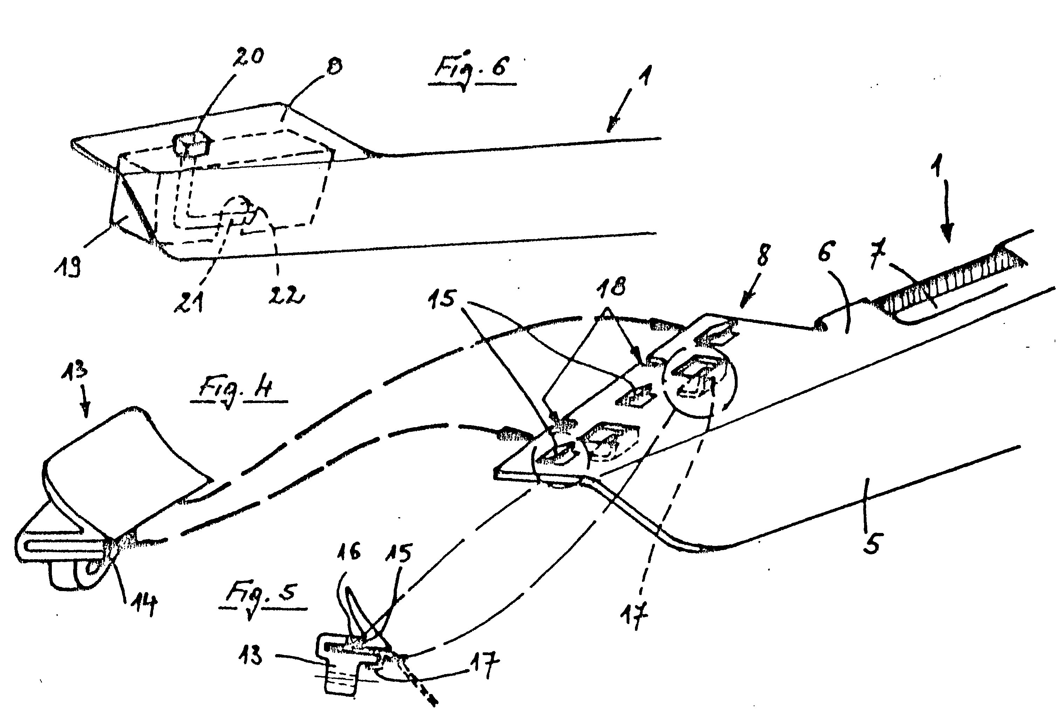

In der Variante der Figuren 4 und 5 ist der Vorsprung 8 für die Aufnahme eines Zwischenstücks 13 mit einem Haken 14 eingerichtet. Zu diesem Zweck umfaßt der Vorsprung 8 elastische Zungen 15, die mit den Löchern 16 des Teils 13 sowie den Anschlägen 17 des Teils 13 zusammenwirken, wobei das Teil 13 auf Stelleinschnitte 18 geführt wird.

In der Variante der Figur 6 trägt der Vorsprung 8 ein angestücktes Teil 19 mit einem Druckknopf 20 zum Betätigen des Verschlusses 21 eines Sitzes 22 für die Aufnahme einer Scheibenwischerachse.

In allen Fällen ist die Befestigung des Wischers am Arm durch das die Anströmfläche bildende Profil 5 verdeckt. Im übrigen kann der Wischer, praktisch ohne ihn dabei zu drehen, durch leichtes Anheben des Arms abgenommen und wieder angebaut werden.

## Patentansprüche

1. Arm für Scheibenwischer, bestehend aus einem Gehäuse (1), von dem ein Ende (2) schwenkbar an einer Pendelnabe (3) befestigt ist und das andere Ende einen Scheibenwischer trägt, wobei der Arm durch mindestens eine Feder (4) gegen die zu wischende Fläche gedrückt wird, wobei das Gehäuse (1) aus einem einzigen Stück besteht und so profiliert ist, daß es eine geneigte Anströmfläche bildet, die in Richtung der zu wischenden Fläche konvergiert und sich über den größeren Teil des Gehäuses (1) erstreckt, wobei das Gehäuse (1) Mittel zum Einhaken (9, 10) eines Scheibenwischers umfaßt, dadurch gekennzeichnet, daß die Mittel zum Einhaken in der Querverlängerung der Anströmfläche (5) so angeordnet sind, daß bei der Hinbewegung des Wischers die Verbindung zwischen Arm und Wischer hinter der Anströmfläche (5) liegt, und daß sowohl die Verbindung als auch ein Teil des Wischers durch das Profil des Gehäuses (1) verdeckt sind.

2. Arm nach Anspruch 1, dadurch gekennzeichnet, daß das Gehäuse (1) Löcher (7) umfaßt, die bei der Hinbewegung des Wischers hinter der Anströmfläche (5) eingearbeitet sind.

3. Arm nach einem der vorherigen Ansprüche, dadurch gekennzeichnet, daß die genannten Befestigungsmittel für einen Wischer einen Haken (10, 17) umfassen, der mit dem Gehäuse (1) aus einem Stück gearbeitet ist.

4. Arm nach einem der vorherigen Ansprüche, dadurch gekennzeichnet, daß das freie Ende des Gehäuses (1) einen der Anströmfläche (5) entgegengesetzten Quervorsprung (8) umfaßt, der mit Befestigungsmitteln für ein Zwischenstück (13, 19) zur Montage eines Wischers ausgerüstet ist.

## Claims

1. An arm for a windscreen wiper consisting of a housing (1) one end (2) of which is pivotably fastened to an oscillating hub (3) and the other end of which carries a windscreen wiper, whereby the arm is pressed against the surface to be wiped by at least one spring (4), and whereby the housing (1) consists of a single piece and is so shaped that it forms an inclined leading surface which converges in the direction of the surface to be wiped and extends over the larger part of the housing (1), and whereby the housing (1) comprises means for hooking on (9, 10) a windscreen wiper, characterized in that the means for hooking on are so arranged in the transverse prolongation of the leading surface (5) that during movement of the wiper the connection between the arm and the wiper lies behind the leading surface (5) and in that both the connection and also a portion of the wiper are covered by the section of the housing (1).

2. An arm according to Claim 1, characterized in that the housing (1) comprises holes (7) which are brought into action behind the leading surface (5) during movement of the wiper.

3. An arm according to one of the preceding Claims, characterized in that the afore mentioned means for fastening a wiper comprise a hook shaped clamp (10, 17) which is made with the housing (1) from one piece.

4. An arm according to one of the preceding Claims, characterized in that the free end of the housing (1) comprises a tranverse projection (8) opposite the leading surface (5) which is equipped with means for fastening an intermediate piece (13, 19) for mounting a wiper.

## Revendications

1. Bras pour balai d'essuyage constitué d'un carter (1) dont une extrémité (2) est montée pivotante sur un moyeu oscillant (3) et dont l'autre extrémité porte un balai d'essuie-glace, le bras étant rappelé vers la surface à essuyer par au moins un ressort (4), le carter (1) étant d'une seule pièce et étant profilé de manière à présenter une surface déflectrice inclinée (5) convergeant vers la surface à essuyer et s'étendant sur la majeure partie du carter (1), le carter (1) comportant des moyens d'accrochage (9, 10) d'un balai d'essuie-glace, caractérisé par le fait que les moyens d'accrochage sont disposés dans le prolongement transversal de la surface déflectrice (5) de manière que la liaison entre bras et balai se trouve derrière la surface déflectrice (5) pendant le mouvement aller de l'essuie-glace, et qu'aussi bien la liaison qu'une partie du balai soit recouverte par le profilé du carter (1).

2. Bras selon la revendication 1, caractérisé par le fait que le carter (1) comporte des orifices (7) qui sont ménagés en arrière de la surface déflectrice (5) pendant le mouvement aller du balai.

3. Bras selon l'une des revendications précédentes, caractérisé par le fait que lesdits moyens de fixation d'un balai comprennent un crochet (10, 17) qui est fabriqué d'une seule pièce avec le carter (1).

4. Bras selon l'une des revendications 1 et 2, caractérisé par le fait que l'extrémité libre du carter (1) comporte une saillie (8) transversale opposée à la surface déflectrice (5), qui est munie de moyens de fixation d'une pièce intermédiaire (13, 19) de montage d'un balai.

EP 0 234 286 B1

Fig.1

Fig.2

Fig.3

1

Fig. 6

Fig. 4

Fig. 5

EP 0 234 286 B1